# EUROPEAN PATENT SPECIFICATION

(11) **EP 2 511 863 B1**
(45) Date of publication and mention of the grant of the patent: **21.04.2021**
(21) Application number: 12157737.3
(22) Date of filing: 01.03.2012
(51) Int. Cl.: G06Q 10/00

(54) **Portable device inventory tracking**
Tragbare Vorrichtung zur Bestandsverfolgung
Suivi d'inventaire de dispositif portable

(30) Priority: 14.04.2011 US 201113086432
(43) Date of publication of application: 17.10.2012
(73) Proprietor: SAP SE, 69190 Walldorf (DE)
(72) Inventor: Moser, Martin, 69190 Walldorf (DE)
(74) Representative: Richardt Patentanwälte PartG mbB

(56) References cited:
- US-A1- 2004 027 251
- US-A1- 2011 068 921
- The claimed subject matter, with due regard to the description and drawings, relates to the automation of processes comprised in the list of subject matter and activities excluded from patentability under Art.52(2) and (3) EPC. The only identifiable technical aspects of the claimed invention relate to the use of conventional, general-purpose data processing technology for processing data of an inherently non-technical nature according to criteria which are administrative. The information technology employed is considered to have been generally known as it was widely available to everyone at the date of filing/priority of the present application. The notoriety of such prior art cannot reasonably be contested.

## Description

### FIELD

The field generally relates to inventory tracking, and more specifically to systems and methods for portable device inventory tracking.

### BACKGROUND

People are always loosing and dropping important and precious items everyday throughout their lives. Many people tend to drop their wallets after paying at the grocery store, leaving their purse behind in a dressing room, and losing other such essential items at inappropriate places. Such items are often of great importance and their contents can sometimes be more valuable than the item lost. In other situations, people can tend to misplace their set of keys to their house, forget where they have parked their car in an enormous parking lot at a shopping mall, or even misplace a second mobile phone that they frequently use. There is always a need to track personal belongings, so that if they are lost, they can be found again.
In addition to tracking personal belongings, one may wish to track data stored on a portable device. A nurse may wish to track that a correct dosage of medicine is given to a correct patient at a precise time. At an auto repair shop, a mechanic may wish to track which cars have had their oil changed, the quantity of oil that each car had received, and the time that the oil change was completed as they are walking around inspecting the shop. As businesses begin to use portable devices to monitor their inventory and work processes, the tracking of data from remote locations will also be of importance and vital to increase productivity.

### SUMMARY

It is an objective of embodiments of the invention to provide for a computer implemented method for enabling a user of a mother device to track one or more satellite devices, data processing system, portable device and corresponding computer-readable storage medium. Said objective is solved by the subject matter of the independent claims. Advantageous embodiments are described in the dependent claims.

The term "computer-readable storage medium," as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device. Examples of computer-readable storage media include, but are not limited to: a floppy disk, punched tape, punch cards, a magnetic hard disk drive, a solid state hard disk, flash memory, a USB thumb drive, Random Access Memory (RAM), Read Only Memory (ROM), an optical disk, a magneto-optical disk, and the register file of the processor. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example data may be retrieved over a modem, over the internet, or over a local area network. References to a computer-readable storage medium should be interpreted as possibly comprising multiple computer-readable storage mediums. Various executable components of a program or programs may be stored in different locations. The computer-readable storage medium may for instance comprise multiple computer-readable storage medium within the same computer system. The computer-readable storage medium may also be computer-readable storage medium distributed amongst multiple computer systems or computing devices.

The term "Computer memory" or "memory" is an example of a computer-readable storage medium. Computer memory is any memory which is accessible by a processor. Examples of computer memory include, but are not limited to: RAM memory, registers, and register files. In some instances a computer memory may also include: a hard disk drive, a floppy drive or a solid state hard drive. For instance, part of a memory may in fact be swap space on a hard drive. References to "computer memory" or "memory" should be interpreted as possibly comprise multiple memories. The memory may for instance comprise multiple memories within the same computer system. The memory may also comprise multiple memories distributed amongst multiple computer systems or computing devices.

The term "short range communication" as used herein may be a Radio Frequency Identification (RFID) communication, Infrared communication, Wireless Local Area Network (WLAN), Bluetooth communication or the like.

In one aspect, the present invention relates to a computer-implemented method for enabling a user of a mother device to track one or more satellite devices that are in a short range communication with the mother device, wherein respective identity information is assigned to the one or more satellite devices, wherein the mother device and the one or more satellite devices are portable devices. The method comprises at the mother device:
- storing the identity information on the mother device, thereby registering the one or more satellite devices;
- sending a reachability request to each of the registered one or more satellite devices by using the short range communication; and
- alerting the user if at least one satellite device of the one or more satellite devices does not respond to the reachability request.

As technology evolves, new and several types of portable devices are being developed with specific setups that enhance the communication capability via, for example, RFID technologies. It is thus not unusual that a user acquires more than one of those devices such as a mobile phone and a Personal Digital Assistant (PDA) for his or her own usage. However, the more devices the user has, the more likely the user is to lose one or more of the devices. To overcome this issue, the present invention provides a new method for regularly checking the reachability of the devices (i.e. satellite devices) belonging to the user by the mother device. An example of the mother device is a mobile phone, which is frequently used, and thus constantly carried, by the user. Therefore, it can be used to track other devices of the user. This mother device may establish a short range communication, such as a near field communication with the satellite devices in order to test for their reachability. This is supported by an alerting system to alert the user in case he or she drops one of the satellite devices. The satellite device may be, for example, a wallet or a backpack with an RFID tag. This is advantageous in that it provides a method to track personal belongings, so that if they are lost, they can be found again.

According to one embodiment, the respective identity information is assigned by the method comprising at the mother device scanning for the one or more satellite devices; receiving an acknowledgement from each of the one or more satellite devices; presenting the one or more satellite devices on the mother device; and assigning the respective identity information to each of the one or more satellite devices.

The mother device is used to identify the satellite devices that the user may wish to track. This is done by scanning a limited area around the mother device, such as the house of the user, and detecting all devices which can establish a short range communication with the mother device. Those devices are then registered for further regular tracking by the mother device. This embodiment is advantageous as it is automatically performed by the mother device. Also it detects only the short range communication enabled devices that can be tracked by the mother device.

According to one embodiment, the respective identity information is assigned by the method comprising at the mother device receiving the respective identity information by prompting the user to indicate the respective identity information of each of the one or more satellite devices and assigning the respective identity information to each of the one or more satellite devices.

The user may manually specify all the devices he or she wanted to track by the mother device. This is advantageous in that the automatic scanning is not required. That is, the registering of the satellite devices is performed without constraints on the position of the satellite devices with respect to the mother device.

According to one embodiment, the respective identity information comprises an owner identifier value.

The owner identifier value is a value to indicate to the satellite device which mother device it is registered to. The owner identifier value may be the same for all the satellite devices.

According to one embodiment, the respective identity information further comprises an item identifier value.

The item identifier value is a unique number that is given by the mother device to indicate its authenticity in a list of registered satellite devices. An item identifier value may be incremental. For example, a satellite device may be a mobile phone that is given an item identifier value of 23001 by the mother device. If a second mobile phone is registered on the mother device, it will be assigned the value of 23002. According to an alternative embodiment, the item identifier value comprises a serial number of the satellite device. In an active technology like Bluetooth, the Bluetooth channel may be used to obtain the device serial number, and to authenticate the device. This can be used, for example, by the mother device to reject satellite devices that cannot authenticate themselves in an initial registration list.

According to one embodiment, alerting comprises generating a text message on a display of the mother device followed by a sound signal.

According to one embodiment, the text message comprises the identity information of the at least one satellite device.

These embodiments may be advantageous, because the user is alerted and thus informed of a missing device that he or she could recuperate following the content of the alert message.

Sending the reachability request is performed according to at least one rule configured on the mother device.

One or more set of rules can be configured to check reachability of a satellite device registered on the mother device. For example, if the satellite device tends to be stationary, such as a device having an electronic transceiver attached to an automobile parked in a parking lot for some time, then the rule can be configured to check its reachability less often or only at certain time intervals. This increases the tracking efficiency of the mother device.

According to one embodiment, the method further comprises receiving a reachability request acknowledgement, wherein the reachability request acknowledgement contains a time stamp and a location of the one or more satellite devices registered on the mother device.

According to one embodiment, the method further comprises displaying a set of directions in conjunction with the location.

These embodiments may be advantageous, because the user can easily find the location of the missing device.

According to one embodiment, the short range communication comprises a near field communication.

An example of the near field communication is the RFID transmission. According to an alternative embodiment, the short range communication comprises a Bluetooth transmission.

Said embodiments may be advantageous in that they support multiple communication technologies such as RFID, Bluetooth and infrared.

In another aspect, the invention relates to a computer-readable non-transitory storage medium comprising computer-readable instructions which, when executed by a processor, cause the processor to perform the method steps of anyone of the above embodiments.

In another aspect, the invention relates to a portable device for enabling a user to track one or more satellite devices such as defined by claim 11.

In another aspect the invention relates to a system comprising the portable device as described above, wherein the system further comprises one or more satellite portable devices configured to:
- send an acknowledgement in response to a scanning for the one or more satellite devices by the portable device; and
- send an acknowledgement in response to receiving the reachability request by the mother device.

According to one embodiment, receiving an acknowledgement from the plurality of satellite devices comprises assigning an owner identifier value to the one or more satellite devices; and assigning an item identifier value to the one or more satellite devices.

According to one embodiment, registering the one or more satellite devices comprises saving a list of at least one owner identifier value and at least one item identifier value.

According to one embodiment, testing for reachability further comprises sending a reachability request to be acknowledged by the one or more satellite devices registered on the mother device.

In another aspect, the invention relates to a computer implemented method for mobile inventory tracking. The method comprises scanning a vicinity of a mother device for one or more satellite devices to be registered on the mother device; receiving an acknowledgement from the one or more satellite devices; presenting the one or more satellite devices on the mother device; registering the one or more satellite devices on the mother device; testing for reachability of the one or more satellite devices registered on the mother device; and generating an alert message if at least one of the one or more satellite devices do not respond to a reachability request. According to one embodiment, receiving an acknowledgement from the plurality of satellite devices item further comprises assigning an owner identifier value to the one or more satellite devices; and assigning an item identifier value to the one or more satellite devices.

According to one embodiment, registering the one or more satellite devices comprises saving a list of at least one owner identifier value and at least one item identifier value.

According to testing for reachability comprises sending a reachability request to be acknowledged by the one or more satellite devices registered on the mother device.

According to the invention the method further comprises configuring at least one rule for when to send the reachability request.

According to one embodiment, the method further comprises receiving a reachability request acknowledgement, wherein the reachability request acknowledgement containing a time stamp and a location.

According to one embodiment, the method of further comprises displaying a set of directions in conjunction with the location of the one or more satellite devices registered on the mother device.

In another aspect, the invention relates to a computer system device network comprising a mother device configured to scan its vicinity for one or more satellite devices to be registered on the mother device; send a reachability request from the mother device to test reachability of the one or more satellite devices; and generate an alert message if at least one of the one or more satellite devices do not respond to the reachability request by sending a reachability request acknowledgement; and the one or more satellite devices configured to: self register on the mother device by responding to the scan by the mother device; and send the acknowledgement in response to receiving the reachability request by the mother device.

According to one embodiment, the mother device is further configured to receive a time stamp and a location of a last received reachability request acknowledgement of the one or more satellite devices.

According to one embodiment, the mother device is configured to assign an owner identifier value and an item identifier value to initiate a registration process. According to one embodiment, the mother device is configured to display a set of directions in conjunction with the location of the satellite device registered on the mother device.

According to one embodiment, the mother device comprises a portable device with an electronic signals transceiver to establish a communication channel.

According to one embodiment, the satellite device comprises a portable device with an electronic signals transceiver to establish a communication channel.

As will be appreciated by one skilled in the art, aspects of the present invention may be embodied as a system, method or computer program product. Accordingly, if not explicitly stated otherwise, aspects of the present invention may take the form of an entirely hardware embodiment, an entirely software embodiment (including firmware, resident software, micro-code, etc.) or an embodiment combining software and hardware aspects that may all generally be referred to herein as a 'module' or 'system'. Any combination of one or more computer-readable medium(s) may be utilized.

### BRIEF DESCRIPTION OF THE DRAWINGS

In the following, preferred embodiments of the invention will be described in greater detail by way of example only making reference to the drawings in which:
FIG. 1 is a block diagram illustrating a mother device scanning a vicinity for one or more satellite devices to be registered on the mother device,
FIG. 2 is a block diagram illustrating a communication process between a mother device and a satellite device,
FIG. 3 is a block diagram illustrating a mother device tracking data stored on a satellite device,
FIG. 4 is a flow diagram illustrating an exemplary method of a portable device inventory tracking,
FIG. 5 is a flow diagram illustrating an exemplary method of registering a satellite device and testing for reachability of the satellite device, and
FIG. 6 is a block diagram of an exemplary computer system.

### DETAILED DESCRIPTION

The system and method for portable device inventory tracking allows registering a plurality of satellite devices onto a mother device and track the satellite devices from the mother device using a Wireless Local Area Network between portable devices. A mother device and a satellite device may comprise electronic portable devices, such as an electronic notepad, a mobile phone, a Global Positioning System (GPS) receiver, and the like, with integrated electronic transceivers that have the means of emitting and receiving electronic carrier waves in order to establish a communication channel with another electronic device. A satellite device may also comprise of separate electronic transceivers attached to personal belongings that are contained within for similar tracking purposes.

Satellite devices may be manually registered (i.e. checked in) and deregistered (i.e. checked out) by a user or may be configured to automatically register or deregister. The mother device may also track data stored on a satellite device. For example, a satellite device may be an electronic notepad, an e-book, a mobile phone, or other such portable devices. In the line of business of medicine, for example, such portable devices may store data of the name and quantity of medicine that each patient should be administered, when the medicine was administered, and at what time. This data may be transmitted from a satellite device to the mother device, therefore tacking the stored data.

One or more set of rules can be configured to check reachability of a satellite device registered on the mother device. For example, if the satellite device tends to be stationary, such as a device having an electronic transceiver attached to an automobile parked in a parking lot for some time, then the rule can be configured to check its reachability less often or only at certain time intervals. If a satellite device does not respond to a reachability request, an alert message can be generated to notify the user that the satellite device is not within reach. The alert message can consist of a timestamp and a location of a last successfully received reachability request acknowledgement from the satellite device. The location is received by the use of a GPS receiver or some similar technology for global positioning. In conjunction with some type of GPS software or the like, the mother device can display step by step directions to the location of where the last reachability request acknowledgement was successfully received.

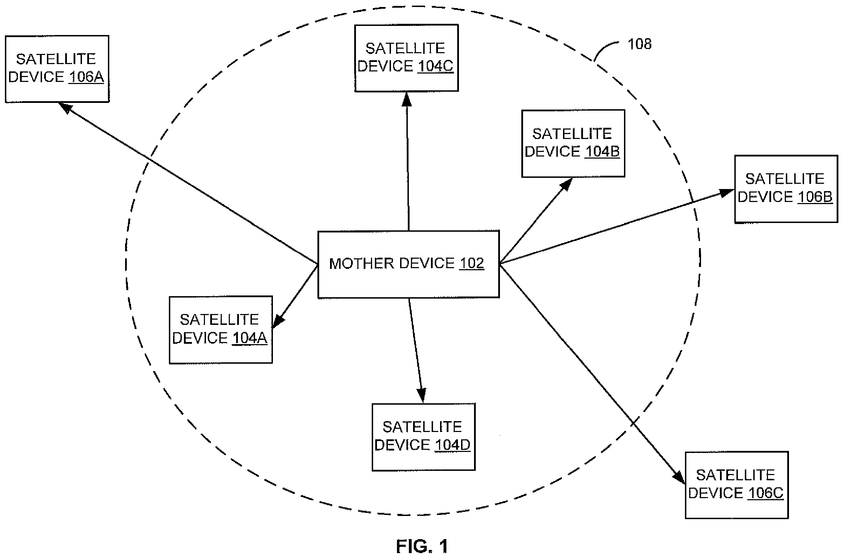

FIG. 1 is a block diagram illustrating a mother device scanning a vicinity for one or more satellite devices (e.g., 104A-D) to be registered on the mother device. Referring to FIG. 1, a portable device for inventory tracking comprise a mother device 102, which scans the vicinity for satellite devices 104 A-D and 106A-C in order to establish a communication channel. If a satellite device (e.g., 104 A-D) is within range 108 of the mother device 102, then a connection and tracking process may be established. If the satellite device (e.g., 106 A-C) is out of range 108 of the mother device 102 then a connection cannot be made as it is not within the range capabilities of the mother device 102.

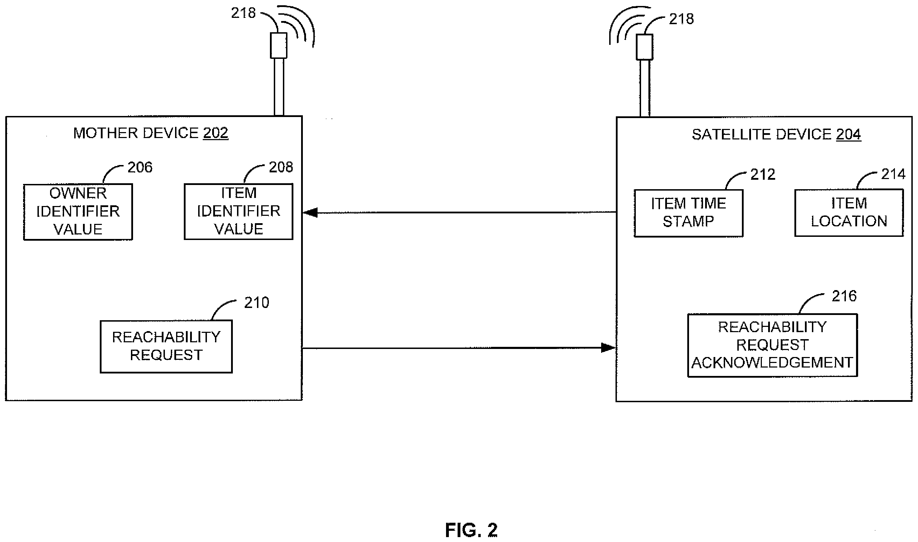

FIG. 2 is a block diagram illustrating a communication process between a mother device 202 and a satellite device 204. Once a communication channel is established between the mother device 202 and the satellite device 204 through the use of a transceiver 218, a registration process can begin. The mother device 202 assigns an owner identifier value 206 and an item identifier value 208 to the satellite device 204. The owner identifier value 206 is a value to indicate to the satellite device 204 which mother device 202 it is registered to. The item identifier value 208 is a unique number that is given by the mother device 202 to indicate its authenticity in a list of registered satellite devices. An item identifier value 208 can be incremental. For example, a within range satellite device 204 may be a mobile phone that is given an item identifier value of 23001 by the mother device 202. If a second mobile phone is registered on the mother device 202, it will be assigned the value of 23002.

Once a registration process has been successfully completed, the mother device 202 may send out a reachability request 210 to the registered satellite device 204 to determine whether it is within communication range. If within range, the satellite device 204 may respond with a reachability request acknowledgement 216 confirming that the initial reachability request 210 sent from the mother device 202 has been received. Along with the reachability request acknowledgement 216, an item time stamp 212 and an item location 214 may also be sent out by the satellite device 204. The item time stamp 212 is the date and time in which the satellite device 204 has received the last successful reachability request 210. In conjunction with a GPS receiver, an item location 214 can indicate the location of the last received reachability request acknowledgement 216 successfully sent from the satellite device 204. Furthermore, if the satellite device 204 does not include a GPS receiver, the location of the mother device 202 can be used as a location for the satellite device 204 if the reachability request acknowledgement 216 has been received by the mother device 202. The assumption is that the satellite device 204 is within communication range of the mother device 202, therefore they both share a similar location. As not every satellite device 204 has a GPS receiver, this method can take advantage of lower hardware costs for the inventory tracking process between a mother device 202 and a satellite device 204.

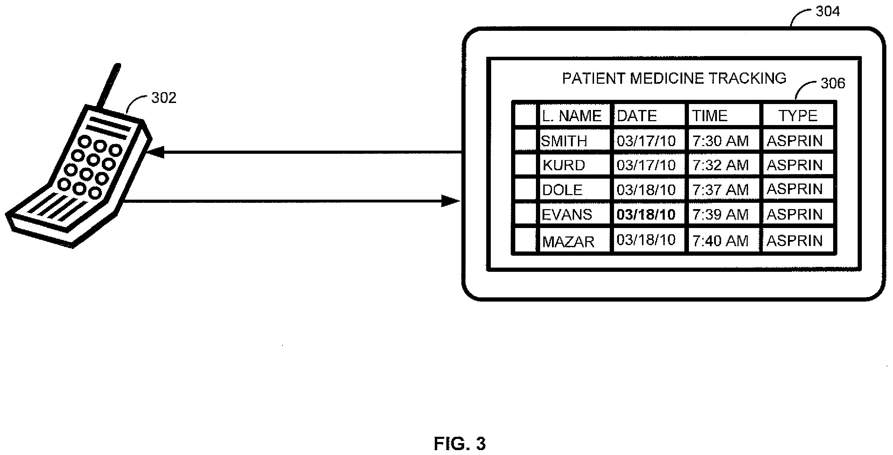

FIG. 3 is a block diagram illustrating a mother device tracking data stored on a satellite device according to various embodiments. Referring to FIG. 3, a mother device for inventory tracking may consist of a mobile phone 302, while a satellite device may consist of an electronic notepad 304. When a communication channel is established, the mobile phone 302 may communicate with the electronic notepad 304 to download data 306 that has been stored on the electronic notepad 304. In the example, the data may be data about tracking medicine that has been administered to patients at a local hospital. Data such as, the name, date, time, location and type of medicine can be accessed by the mobile phone 302 and download on the local storage device of the mother device. A user may then view this data or wish to upload it onto a database or server for collaboration purposes. The user can also configure a set of rules of when to transfer data between the mobile phone 302 and the electronic notepad 304. For example, a configured rule may be a certain time interval, a certain amount of transfers per hour, and other such similar rules.

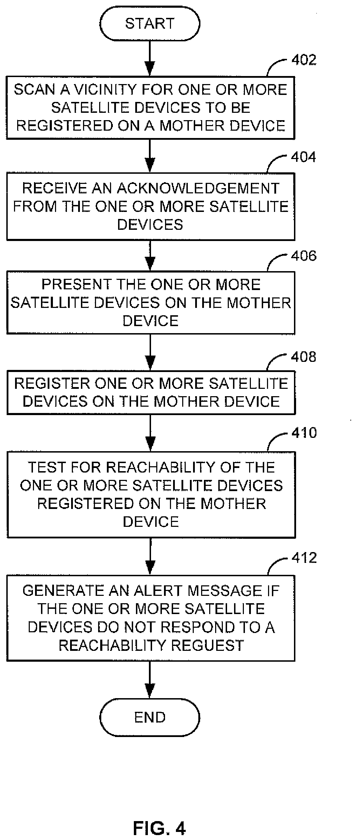

FIG. 4 is a flow diagram illustrating an exemplary method of a portable device inventory tracking. Referring to FIG. 4, at process block 402, a mother device scans a vicinity for one or more satellite devices to be registered. The mother device then receives an acknowledgement from the one or more satellite devices, as in process block 404. The one or more satellite devices are presented on the mother device, as in process block 406, and a user can choose to register one or more satellite devices on the mother device, as in process block 408. In process block 410, a periodical test for reachability of the one or more satellite devices registered on the mother device can be performed. An alert message is generated if the one or more satellite devices do not respond to a reachability request, as in process block 412. The registration of the satellite devices may run in parallel to the repetitive reachability tests for the satellite devices.

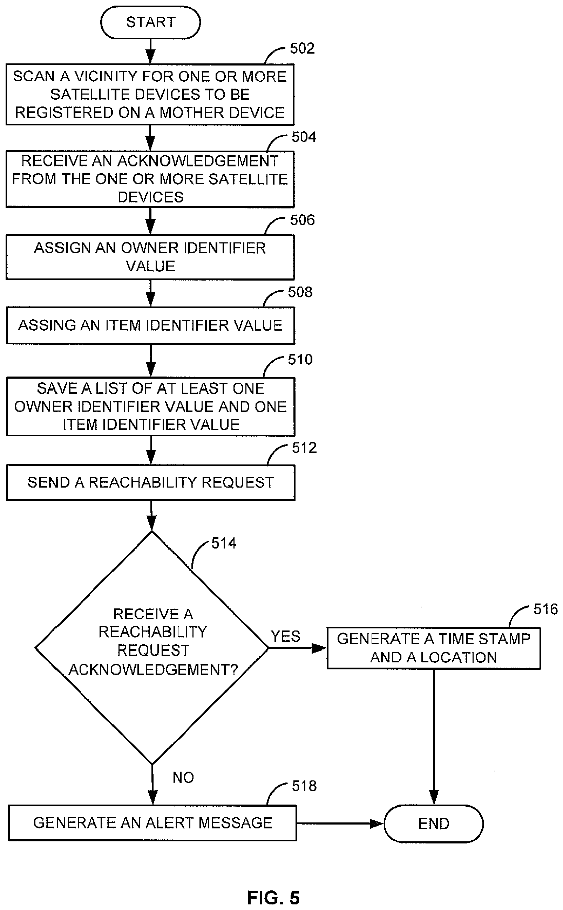

FIG. 5 is a flow diagram illustrating an exemplary method of registering a satellite device and testing for reachability of the satellite device. Referring to FIG 5, a mother device scans a vicinity for one or more satellite devices to be registered, as in process block 502. When the mother device receives an acknowledgement from the one or more satellite devices, as in process block 504, it assigns an owner identifier value, as in process block 506, and assigns an item identifier value, as in process block 508 to each registered satellite device. A list of satellite devices are presented on the mother device and a user can save the satellite devices that he or she wishes to be registered.

When registering, a user is saving at least one owner identifier value and one item identifier value, as in process block 510, assigned to the satellite device. For example, in the case of registering a mobile phone, the assigned owner identifier value and the item identifier value are saved on the mother device. In the case of registering two mobile phones, the owner identifier value may be the same for both phones, but the item identifier values may be similar in value, but with an increment of one, for instance. Satellite devices can be registered (i.e. checked-in) or deregistered (i.e. checked-out) manually by the user or can be configured to automatically. A user can configure the mother device to determine when to automatically register or deregister a satellite device.

The mother device can send a reachability request to the registered satellite devices, as in process block 512. The reachability request can be configured to be sent out a number of different ways. For instance, at certain time intervals, a certain amount of requests per a specific time period, and other such rules. Once a request has been sent, a reachability request acknowledgement is expected from the satellite device. If a reachability request acknowledgement has been received, as in process block 514, then a time stamp and location is generated, as in process block 516. If a reachability request 512 has not been acknowledged by one or more satellite devices then an alert message is generated, as in process block 518. An alert message can be preconfigured to be prioritized based on importance (i.e. low, medium, and high). For example, when tracking a satellite device, such as an electronic transceiver attached to a wallet, the wallet can be of higher importance that a set of car keys to an automobile. An alert message can also consist of a log entry that displays more detailed information about the alert itself, or can be a time stamp and a location of the last reachability request acknowledgement successfully sent from the satellite device. The registration of the satellite devices may run in parallel to the repetitive reachability tests for the satellite devices.

Some embodiments of the invention may include the above-described methods being written as one or more software components. These components, and the functionality associated with each, may be used by client, server, distributed, or peer computer systems. These components may be written in a computer language corresponding to one or more programming languages such as, functional, declarative, procedural, object-oriented, lower level languages and the like. They may be linked to other components via various application programming interfaces and then compiled into one complete application for a server or a client. Alternatively, the components maybe implemented in server and client applications. Further, these components may be linked together via various distributed programming protocols. Some example embodiments of the invention may include remote procedure calls being used to implement one or more of these components across a distributed programming environment. For example, a logic level may reside on a first computer system that is remotely located from a second computer system containing an interface level (e.g., a graphical user interface). These first and second computer systems can be configured in a server-client, peer-to-peer, or some other configuration. The clients can vary in complexity from mobile and handheld devices, to thin clients and on to thick clients or even other servers.

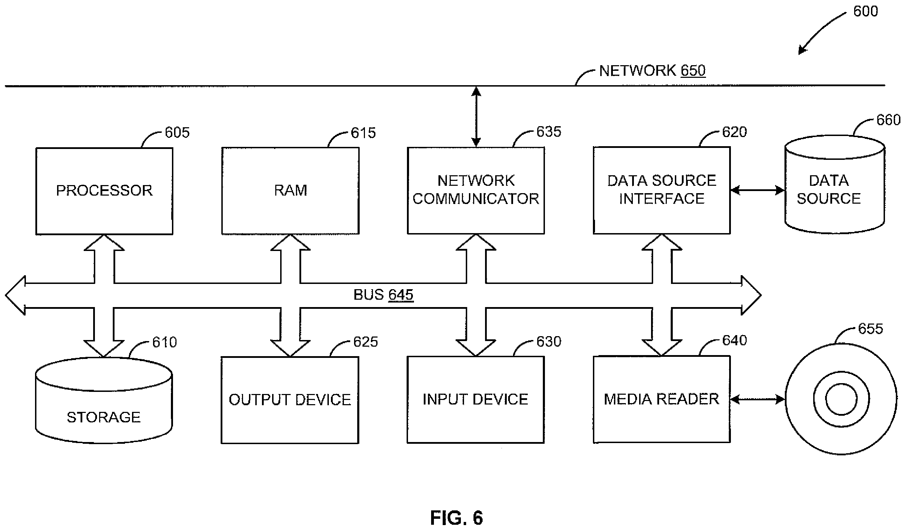

FIG. 6 is a block diagram of an exemplary computer system 600. The computer system 600 includes a processor 605 that executes software instructions or code stored on a computer readable storage medium 655 to perform the above-illustrated methods of the invention. The computer system 600 includes a media reader 640 to read the instructions from the computer readable storage medium 655 and store the instructions in storage 610 or in random access memory (RAM) 615. The storage 610 provides a large space for keeping static data where at least some instructions could be stored for later execution. The stored instructions may be further compiled to generate other representations of the instructions and dynamically stored in the RAM 615. The processor 605 reads instructions from the RAM 615 and performs actions as instructed. According to one embodiment of the invention, the computer system 600 further includes an output device 625 (e.g., a display) to provide at least some of the results of the execution as output including, but not limited to, visual information to users and an input device 630 to provide a user or another device with means for entering data and/or otherwise interact with the computer system 600. Each of these output devices 625 and input devices 630 could be joined by one or more additional peripherals to further expand the capabilities of the computer system 600. A network communicator 635 may be provided to connect the computer system 600 to a network 650 and in turn to other devices connected to the network 650 including other clients, servers, data stores, and interfaces, for instance. The modules of the computer system 600 are interconnected via a bus 645. Computer system 600 includes a data source interface 620 to access data source 660. The data source 660 can be accessed via one or more abstraction layers implemented in hardware or software. For example, the data source 660 may be accessed by network 650. In some embodiments the data source 660 may be accessed via an abstraction layer, such as, a semantic layer.

A data source is an information resource. Data sources include sources of data that enable data storage and retrieval. Data sources may include databases, such as, relational, transactional, hierarchical, multi-dimensional (e.g., OLAP), object oriented databases, and the like. Further data sources include tabular data (e.g., spreadsheets, delimited text files), data tagged with a markup language (e.g., XML data), transactional data, unstructured data (e.g., text files, screen scrapings), hierarchical data (e.g., data in a file system, XML data), files, a plurality of reports, and any other data source accessible through an established protocol, such as, Open DataBase Connectivity (ODBC), produced by an underlying software system (e.g., ERP system), and the like. Data sources may also include a data source where the data is not tangibly stored or otherwise ephemeral such as data streams, broadcast data, and the like. These data sources can include associated data foundations, semantic layers, management systems, security systems and so on.

Aspects of the present disclosure are described with reference to flowchart illustrations and/or block diagrams of methods, apparatus (systems) and computer program products according to embodiments of the present disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The block diagrams in the Figures illustrate the architecture, functionality, and operation of possible implementations of systems, and methods according to various embodiments of the present disclosure. In this regard, each block in the block diagrams may represent a module, segment, or portion of code, which comprises one or more executable instructions for implementing the specified logical function(s). It will also be noted that each block of the block diagrams, and combinations of blocks in the block diagrams, can be implemented by special purpose hardware-based systems that perform the specified functions or acts, or combinations of special purpose hardware and computer instructions.

The terminology used herein is for the purpose of describing particular embodiments only and is not intended to be limiting of the invention. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. The embodiment was chosen and described in order to best explain the principles of the invention and the practical application, and to enable others of ordinary skill in the art to understand the invention for various embodiments with various modifications as are suited to the particular use contemplated.

### List of Reference Numerals

- 102: mother device
- 104: satellite device
- 106: satellite device
- 108: signal range
- 202: mother device
- 204: satellite device
- 206: owner identifier value
- 208: item identifier value
- 210: reachability request
- 212: item time stamp
- 214: item location
- 216: reachability request acknowledgement
- 218: transceiver
- 302: mobile phone
- 304: notepad
- 306: data
- 402-412: process blocks
- 502-518: process blocks
- 600: computer system
- 605: processor
- 610: storage
- 615: RAM
- 620: data source interface
- 625: output device
- 630: input device
- 635: network communicator
- 640: media reader
- 645: bus
- 650: network
- 655: computer readable storage medium
- 660: data source

## Claims

1. A computer-implemented method for enabling a user of a mother device (102) to track one or more satellite devices (104) that are in a short range communication with the mother device (102), wherein respective identity information is assigned to the one or more satellite devices (104), wherein the mother device (102) and the one or more satellite devices (104) are portable devices, wherein the short range communication comprises a Wireless Local Area Network communication, the method comprising at the mother device:
- storing the identity information on the mother device (102), thereby registering the one or more satellite devices (104);
- sending a reachability request (210) to each of the registered one or more satellite devices (104) by using the short range communication; wherein sending the reachability request (210) is performed according to at least one rule configured on the mother device (102), wherein the at least one rule comprises sending the reachability request in predefined time intervals; and
- alerting the user if at least one satellite device (104) of the one or more satellite devices (104) does not respond to the reachability request (210).

2. The method of claim 1, wherein the respective identity information is assigned by the method comprising at the mother device:
- scanning for the one or more satellite devices (104);
- receiving an acknowledgement from each of the one or more satellite devices (104);
- presenting the one or more satellite devices (104) on the mother device (102); and
- assigning the respective identity information to each of the one or more satellite devices (104).

3. The method according to claim 1, wherein the respective identity information is assigned by the method comprising at the mother device:
- receiving the respective identity information by prompting the user to indicate the respective identity information of each of the one or more satellite devices (104).
- assigning the respective identity information to each of the one or more satellite devices (104).

4. The method according to any one of the previous claims, wherein the respective identity information comprises an owner identifier value (206).

5. The method according to any one of the previous claims, wherein the respective identity information further comprises an item identifier value (208).

6. The method according to claim 1, wherein alerting comprises generating a text message on a display of the mother device (102) followed by a sound signal.

7. The method according to claim 6, wherein the text message comprises the identity information of the at least one satellite device (104).

8. The method according to claim 1, further comprising receiving a reachability request acknowledgement (216), wherein the reachability request acknowledgement (216) contains a time stamp and a location of the one or more satellite devices (104) registered on the mother device (102).

9. The method according to claim 8, further comprising displaying a set of directions in conjunction with the location.

10. A computer-readable non-transitory storage medium comprising computer-readable instructions which, when executed by a processor (605), cause the processor (605) to perform the method steps of anyone of the previous claims.

11. A portable device (102) for enabling a user to track one or more satellite devices (104) that are in near field communication with the portable device (102), wherein respective identity information are assigned to the one or more satellite devices (104), wherein the short range communication comprises a Wireless Local Area Network communication, the portable device comprising :
- a storing unit for storing the identity information on the portable device (102), thereby registering the one or more satellite devices (104);
- a sending unit for sending a reachability request (210) to each of the registered one or more satellite devices (104); wherein sending the reachability request (210) is performed according to at least one rule configured on the mother device (102), wherein the at least one rule comprises sending the reachability request in predefined time intervals; and
- an alerting unit for alerting the user if at least one satellite device (104) of the one or more satellite devices (104) does not respond to the reachability request (210).

12. A system comprising the portable device (102) of claim 11, wherein the system further comprises one or more satellite portable devices (104) configured to:
- send an acknowledgement in response to a scanning for the one or more satellite devices (104) by the portable device (102); and
- send an acknowledgement in response to receiving the reachability request (210) by the mother device (102).

## Patentansprüche

1. Computer-implementiertes Verfahren, um einem Benutzer einer Muttervorrichtung (102) zu ermöglichen, eine oder mehrere Satellitenvorrichtungen (104) zu verfolgen, die in einer Nahbereichskommunikation mit der Muttervorrichtung (102) sind, wobei der einen oder mehreren Satellitenvorrichtungen (104) entsprechende Identitätsinformationen zugewiesen werden, wobei die Muttervorrichtung (102) und die eine oder mehrere Satellitenvorrichtungen (104) tragbare Vorrichtungen sind, wobei die Nahbereichskommunikation eine Kommunikation über ein Drahtloses Lokales Netzwerk umfasst, wobei das Verfahren an der Muttervorrichtung umfasst:
- Speichern der Identitätsinformationen auf der Muttervorrichtung (102), dabei die eine oder mehrere Satellitenvorrichtungen (104) registrierend;
- Senden einer Erreichbarkeitsanfrage (210) an jede der registrierten einen oder mehreren Satellitenvorrichtungen (104) durch Nutzung der Nahbereichskommunikation; wobei das Senden der Erreichbarkeitsanfrage (210) ausgeführt wird entsprechend mindestens einer Regel, die auf der Muttervorrichtung (102) konfiguriert wurde, wobei die mindestens eine Regel ein Senden der Erreichbarkeitsanfrage in vordefinierten Zeitintervallen umfasst; und
- Warnen des Benutzers, wenn mindestens eine Satellitenvorrichtung (104) der einen oder mehreren Satellitenvorrichtungen (104) nicht auf die Erreichbarkeitsanfrage (210) reagiert.

2. Verfahren nach Anspruch 1, wobei die entsprechenden Identitätsinformationen zugeordnet werden durch das Verfahren, das an der Muttervorrichtung umfasst:
- Abtasten nach der einen oder mehreren Satellitenvorrichtungen (104);
- Empfangen einer Bestätigung von jeder von der einen oder mehreren Satellitenvorrichtungen (104);
- Präsentieren der einen oder mehreren Satellitenvorrichtungen (104) an der Muttervorrichtung (102); und
- Zuordnen der entsprechenden Identitätsinformationen zu jeder von der einen oder mehreren Satellitenvorrichtungen (104).

3. Verfahren nach Anspruch 1, wobei die entsprechenden Identitätsinformationen zugeordnet werden durch das Verfahren, das an der Muttervorrichtung umfasst:
- Empfangen der entsprechenden Identitätsinformationen durch Auffordern des Benutzers, die entsprechenden Identitätsinformationen von jeder von der einen oder mehreren Satellitenvorrichtungen (104) anzugeben,
- Zuordnen der entsprechenden Identitätsinformationen zu jeder von der einen oder mehreren Satellitenvorrichtungen (104).

4. Verfahren nach einem der vorangehenden Ansprüche, wobei die entsprechenden Identitätsinformationen einen Eigentümeridentifizierungswert (206) umfassen.

5. Verfahren nach einem der vorangehenden Ansprüche, wobei die entsprechenden Identitätsinformationen einen Elementidentifizierungswert (208) umfassen.

6. Verfahren nach Anspruch 1, wobei Warnen das Erzeugen einer Textnachricht auf einer Anzeige der Muttervorrichtung (102), gefolgt von einem Tonsignal, umfasst.

7. Verfahren nach Anspruch 6, wobei die Textnachricht die Identitätsinformationen der mindestens einen Satellitenvorrichtung (104) umfasst.

8. Verfahren nach Anspruch 1, ferner umfassend Empfangen einer Erreichbarkeitsanfragebestätigung (216), wobei die Erreichbarkeitsanfragebestätigung (216) einen Zeitstempel und einen Ort der einen oder mehreren Satellitenvorrichtungen (104), registriert an der Muttervorrichtung (102), umfasst.

9. Verfahren nach Anspruch 8, ferner umfassend Anzeigen einer Gruppe von Richtungen in Verbindung mit dem Ort.

10. Computerlesbares, nicht flüchtiges Speichermedium, umfassend computerlesbare Anweisungen, die, wenn ausgeführt durch einen Prozessor (605), den Prozessor (605) veranlassen, die Verfahrensschritte nach einem der vorangehenden Ansprüche auszuführen.

11. Tragbare Vorrichtung (102), um einem Benutzer zu ermöglichen, eine oder mehrere Satellitenvorrichtungen (104) zu verfolgen, die in Nahbereichskommunikation mit der tragbaren Vorrichtung (102) sind, wobei der einen oder mehreren Satellitenvorrichtungen (104) entsprechende Identitätsinformationen zugewiesen werden, wobei die Nahbereichskommunikation eine Kommunikation über ein Drahtloses Lokales Netzwerk umfasst, wobei die tragbare Vorrichtung umfasst:
- eine Speichereinheit zum Speichern der Identitätsinformationen auf der tragbaren Vorrichtung (102), dabei die eine oder mehrere Satellitenvorrichtungen (104) registrierend;
- eine Sendeeinheit zum Senden einer Erreichbarkeitsanfrage (210) an jede der registrierten einen oder mehreren Satellitenvorrichtungen (104); wobei das Senden der Erreichbarkeitsanfrage (210) ausgeführt wird entsprechend mindestens einer Regel, die auf der Muttervorrichtung (102) konfiguriert wurde, wobei die mindestens eine Regel ein Senden der Erreichbarkeitsanfrage in vordefinierten Zeitintervallen umfasst; und
- eine Warneinheit zum Warnen des Benutzers, wenn mindestens eine Satellitenvorrichtung (104) der einen oder mehreren Satellitenvorrichtungen (104) nicht auf die Erreichbarkeitsanfrage (210) reagiert.

12. System, umfassend die tragbare Vorrichtung (102) nach Anspruch 11, wobei das System ferner eine oder mehrere tragbare Satellitenvorrichtungen (104) umfasst, ausgelegt zum:
- Senden einer Bestätigung in Reaktion auf ein Abtasten nach der einen oder mehreren Satellitenvorrichtungen (104) durch die tragbare Vorrichtung (102); und
- Senden einer Bestätigung in Reaktion auf das Empfangen der Erreichbarkeitsanfrage (210) durch die Muttervorrichtung (102).

## Revendications

1. Procédé mis en œuvre par ordinateur pour permettre à un utilisateur d'un dispositif mère (102) de suivre un ou plusieurs dispositifs satellites (104) qui sont en communication de courte portée avec le dispositif mère (102), dans lequel une information d'identité respective est attribuée au dispositif satellite ou aux nombreux dispositifs satellites (104), dans lequel le dispositif mère (102) et le dispositif ou les dispositifs satellites (104) sont des dispositifs portables, dans lequel la communication de courte portée comprend une communication en réseau local sans fil, le procédé comprenant, au niveau du dispositif mère :
- le stockage de l'information d'identité sur le dispositif mère (102), enregistrant ainsi le ou les nombreux dispositifs satellites (104) ;
- l'envoi d'une demande d'accessibilité (210) à chacun parmi le ou les dispositifs satellites (104) enregistrés en utilisant la communication de courte portée ; dans lequel l'envoi de la demande d'accessibilité (210) est effectué selon au moins une règle conçue sur le dispositif mère (102), dans lequel l'au moins une règle comprend l'envoi de la demande d'accessibilité dans des intervalles de temps prédéfinis ; et
- l'alerte de l'utilisateur si au moins un dispositif satellite (104) parmi le ou les dispositifs satellites (104) ne répond pas à la demande d'accessibilité (210).

2. Procédé selon la revendication 1, dans lequel l'information d'identité respective est attribuée par le procédé comprenant, au niveau du dispositif mère :
- le balayage pour le ou les dispositifs satellites (104) ;
- la réception d'un accusé de réception à partir de chacun parmi le ou les dispositifs satellites (104) ;
- la présentation du ou des dispositifs satellites (104) sur le dispositif mère (102) ; et
- l'attribution de l'information d'identité respective à chacun parmi le ou les dispositifs satellites (104).

3. Procédé selon la revendication 1, dans lequel l'information d'identité respective est attribuée par le procédé comprenant, au niveau du dispositif mère :
- la réception de l'information d'identité respective en incitant l'utilisateur à indiquer l'information d'identité respective à chacun parmi le ou les dispositifs satellites (104),
- l'attribution de l'information d'identité respective à chacun parmi le ou les dispositifs satellites (104).

4. Procédé selon l'une quelconque des revendications précédentes, dans lequel l'information d'identité respective comprend une valeur d'identifieur propriétaire (206).

5. Procédé selon l'une quelconque des revendications précédentes, dans lequel l'information d'identité respective comprend en outre une valeur d'identifieur d'article (208).

6. Procédé selon la revendication 1, dans lequel l'alerte comprend la génération d'un message de texte sur un affichage du dispositif mère (102) suivi d'un signal sonore.

7. Procédé selon la revendication 6, dans lequel le message de texte comprend l'information d'identité de l'au moins un dispositif satellite (104).

8. Procédé selon la revendication 1, comprenant en outre la réception d'un accusé de réception de demande d'accessibilité (216), dans lequel l'accusé de réception de demande d'accessibilité (216) contient un horodatage et une localisation du ou des dispositifs satellites (104) enregistrés sur le dispositif mère (102).

9. Procédé selon la revendication 8, comprenant en outre l'affichage d'un ensemble de directions en conjonction avec la localisation.

10. Support de stockage non transitoire lisible par ordinateur comprenant des instructions lisibles par ordinateur qui, lorsqu'elles sont exécutées par un processeur (605), font en sorte que le processeur (605) exécute les étapes de procédé selon l'une quelconque des revendications précédentes.

11. Dispositif portable (102) pour permettre à un utilisateur de suivre un ou plusieurs dispositifs satellites (104) qui sont en communication de courte portée avec le dispositif portable (102), dans lequel des informations d'identité respectives sont attribuées au dispositif satellite ou aux nombreux dispositifs satellites (104), dans lequel la communication de courte portée comprend une communication en réseau local sans fil, le dispositif portable comprenant :
- une unité de stockage pour stocker l'information d'identité sur le dispositif portable (102), enregistrant ainsi le ou les dispositifs satellites (104) ;
- une unité d'envoi pour envoyer une demande d'accessibilité (210) à chacun parmi le ou les dispositifs satellites (104) enregistrés ; dans lequel l'envoi de la demande d'accessibilité (210) est effectuée selon au moins une règle conçue sur le dispositif mère (102), dans lequel l'au moins une règle comprend l'envoi de la demande d'accessibilité dans des intervalles de temps prédéfinis ; et
- une unité d'alerte pour alerter l'utilisateur si au moins un dispositif satellite (104) parmi le ou les dispositifs satellites (104) ne répond pas à la demande d'accessibilité (210).

12. Système comprenant le dispositif portable (102) selon la revendication 11, où le système comprend en outre un ou plusieurs dispositifs satellites (104) conçus pour :
- envoyer un accusé de réception en réponse à un balayage pour le ou les dispositifs satellites (104) par le dispositif portable (102) ; et
- envoyer un accusé de réception en réponse à la réception de la demande d'accessibilité (210) par le dispositif mère (102).
